Europäisches Patentamt

European Patent Office

Office européen des brevets

(19)

(11) Publication number: **0 118 897**

**A2**

(12) # EUROPEAN PATENT APPLICATION

(21) Application number: **84102565.3**

(22) Date of filing: **09.03.84**

(51) Int. Cl.³: **G 01 N 15/02**

(30) Priority: **11.03.83 US 474481**

(43) Date of publication of application:
**19.09.84 Bulletin 84/38**

(84) Designated Contracting States:
**BE DE FR GB IT LU NL**

(71) Applicant: **E.I. DU PONT DE NEMOURS AND COMPANY**
**1007 Market Street**
**Wilmington Delaware 19898(US)**

(72) Inventor: **Abbott, Scot David**
**2520 Berwyn Road**
**Wilmington Delaware 19810(US)**

(74) Representative: **von Kreisler, Alek, Dipl.-Chem. et al,**
**Deichmannhaus am Hauptbahnhof**
**D-5000 Köln 1(DE)**

(54) **Particle counting system for a fractionating device.**

(57) A method and system for generating a selective particle size population distribution of particles having a predetermined nature. Particles having a nature different from that of the particles of interest are accounted for. The system includes a fractionating apparatus connected to a counting apparatus. The passage of a particle through the counting apparatus generates a signal representative of the presence of a particle and indicative of the nature of the particle.

Fig. 1.

## TITLE

## PARTICLE COUNTING SYSTEM

## FOR A FRACTIONATING DEVICE

## BACKGROUND OF THE INVENTION

This invention relates to a system for counting particles entrained in a fluid eluate from a fractionating apparatus and, in particular, to a system adapted to provide a particle size population distribution of particles of a particular predeterined nature fractionated by the fractionating apparatus.

Subject matter disclosed herein is also disclosed in the copending applications of S. D. Abbott et al., Serial No. _____, titled "Particle Reagent Size Distribution Measurements for Immunoassay", filed contemporaneously herewith and of S. D. Abbott and C. W. Robertson, Serial No. _____, titled "Sample Cuvette for a Particle Counting Apparatus", also filed contemporaneously herewith.

When dealing with a fluid sample having particulate matter suspended therein it is often desirable to be able to ascertain a particle population distribution of the sample, i.e., the number of particles of a particular predetermined nature present in the sample within each of a predetermined number of predetermined size ranges. By "nature" of a particle is meant its size and composition as manifested by its index of refraction. This information is useful, for example, in such diverse applications as the manufacture of inks, polymer emulsions and carbon blacks. The particle size distribution in such materials is

P-0406

0118897

responsible for product properties such as reactivity, optical properties and hue, and texture (e.g., "smooth" feeling of face powder). Knowing and controlling distribution of particle size is important in the manufacture of such products. Such information is also useful in separation of subcellular particles and fragments and in investigations of microemulsions (e.g., classification of liposomes by size).

Particles entrained in a fluid medium may be separated using any one of a number of known fractionation apparatus, such as a disc centrifuge, or known fractionation techniques, such as steric and/or sedimentation field flow fractionation. In general, when using these fractionation schemes, particles having substantially equal effective mass (functionally related to the size-density product as defined in accordance with the equations governing that particular scheme) are transported from or within the fractionating apparatus at substantially the same time. Usually one assumes constant density and separation mechanism, but problems are often encountered in practice. Thus, for example, during a given time interval following the start of a fractionation, a smaller-sized particle consisting of a more dense nature may separate with a larger-sized particle consisting of a less dense nature. This could lead to ambiguous results.

As noted earlier, it is useful to be able to obtain a population distribution of particles of a predetermined particular nature. When the sample contains particles of substantially equal particle density and increasingly larger-size, i.e., diameter, particles elute from the field flow fractionating apparatus in a time-dependent sequence. Thus, during any given time increment it may be assumed that only particles within a predetermined diameter range elute from the fractionating apparatus.

This fact makes possible the application of various techniques for obtaining an indication of the population of particles in each size range. One known technique involves segregating the eluate from the fractionating apparatus during a given time period, drying the eluate and weighing it. When repeated for the eluate obtained during several time periods an indication as to the particle size distribution may be obtained. However, this technique is of little practical value. Moreover, it is time consuming and prone to very large errors. An alternative technique involves photometric analysis of the eluate from the fractionating apparatus. The amount of light absorbed at a given wavelength is used to provide an indication of the amount of particles present and thus, over several time periods, an indication of population distribution. This technique is reported to not provide an accurate indication of the amount of material eluting from the fractionating apparatus. Additionally, the technique is not discriminating enough or sensitive enough. For example, x-ray absorbance requires about one per cent sample concentration (weight per volume); photometric analysis with ultraviolet light (254 nanometers) typically requires a $10^{-5}$ sample concentration. Even lower sample concentrations are typically confronted in sedimentation field flow fractionating separations, thus rendering these techniques poor, at best, for such dilute concentrations.

It is therefore believed to be advantageous to provide a more accurate alternative apparatus and method for obtaining a particle size distribution. Preferably such an alternative should include a direct count of particles thereby eliminating the perceived disadvantages attendant upon the use of prior weighing or absorbance techniques.

It is believed to be of even further advantage to be also able to verify that a particle counted as falling within a predetermined size range is indeed a particle that has a density consistent with that size range. In this way, the sample may be verified as being homogeneous and the presence of particles in the eluate having a nature different from that of the particles of interest may be ascertained.

In several separation instances the size and density of particles in the eluate at a given time is ambiguous. Large particles (equal to or greater than one micrometer) along with small particles (less than one micrometer) in a sample can elute at substantially the same time from a fractionating apparatus because of the simultaneous occurrence of two separation mechanisms, viz., steric and sedimentation field flow fractionation. Because of this, it is believed to be advantageous to quantitate the sample selectively, taking into account the presence of the two (or more) particle size ranges separately to thus detect and rationalize fractionation ambiguities due to mixed mechanisms.

### SUMMARY OF THE INVENTION

The instant invention relates to a particle counting system and method adapted to provide a

0118897

selective quantitative particle size population distribution of particles having a predetermined nature. By "nature" of the particle it is meant its size and composition as manifested by its index of refraction. By "selective" it is meant that particles of a nature different from the nature of the particles of interest are identified and accounted for during the generation of the particle size distribution and fractionation due to mixed mechanisms are detected and rationalized. The system includes a fractionating apparatus, such as a sedimentation field flow fractionation apparatus or a disc centrifuge, being connected to a particle counting apparatus. The fractionating apparatus separates particles in a sample in accordance with a predetermined physical property. For example, in the sedimentation field flow case, the eluate from the fractionating apparatus contains a highly resolved particle stream in which lower density particles elute before the higher density particles. The particle counting apparatus is connected to the fractionating apparatus and arranged such that the eluate from the fractionating apparatus may pass through a viewing zone located within the counter. The counter is adapted to generate a signal containing information representative of both the presence of a particle within the viewing zone and of the nature of the particle. This information regarding the presence and nature of the particle may thereby be used to generate a selective, quantitative population distribution of particles within the sample.

## BRIEF DESCRIPTION OF THE DRAWINGS

The invention will be more fully understood from the following detailed description thereof taken in connection with the accompanying drawings which form a part of this application and in which:

Figure 1 is a stylized pictorial representation of a particle counting system in accordance with the present invention;

Figures 2A and 2B are, respectively, plan and side elevational views of a cuvette adapted for use in a particle counting apparatus in accordance with the present invention; and

Figure 3 is a stylized schematic representation of the scattering and collection of radiation by particles passing through a viewing zone in a cuvette such as that shown in Figure 2.

## DETAILED DESCRIPTION OF THE INVENTION

Throughout the following detailed description similar reference numerals refer to similar elements in all figures of the drawings.

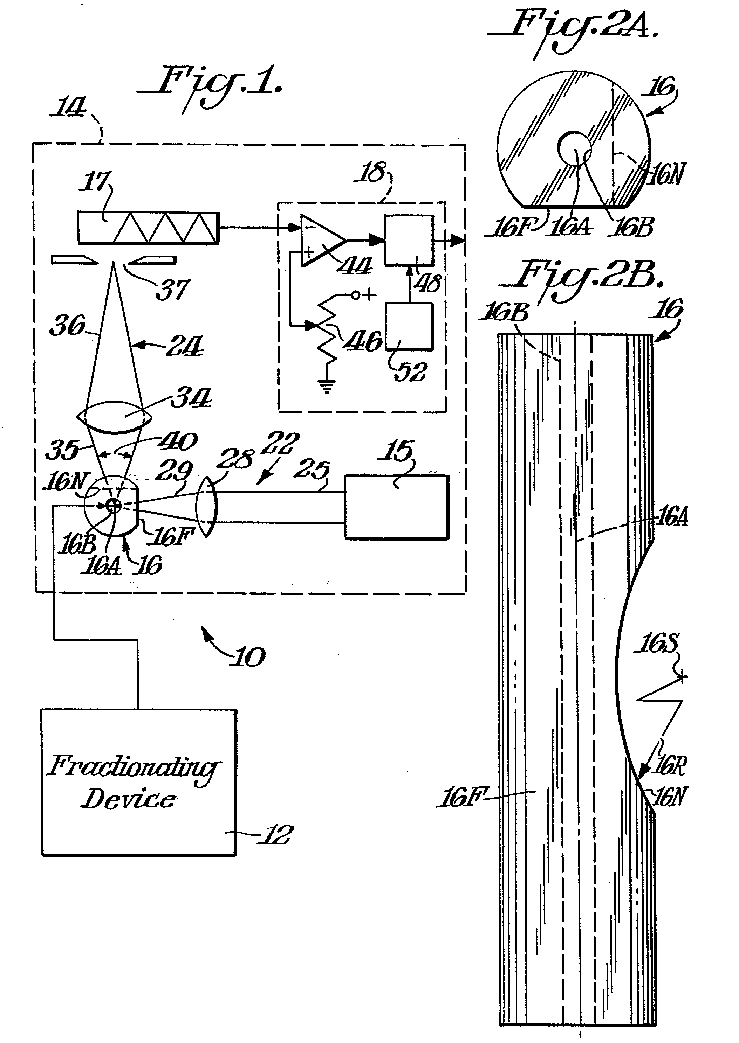

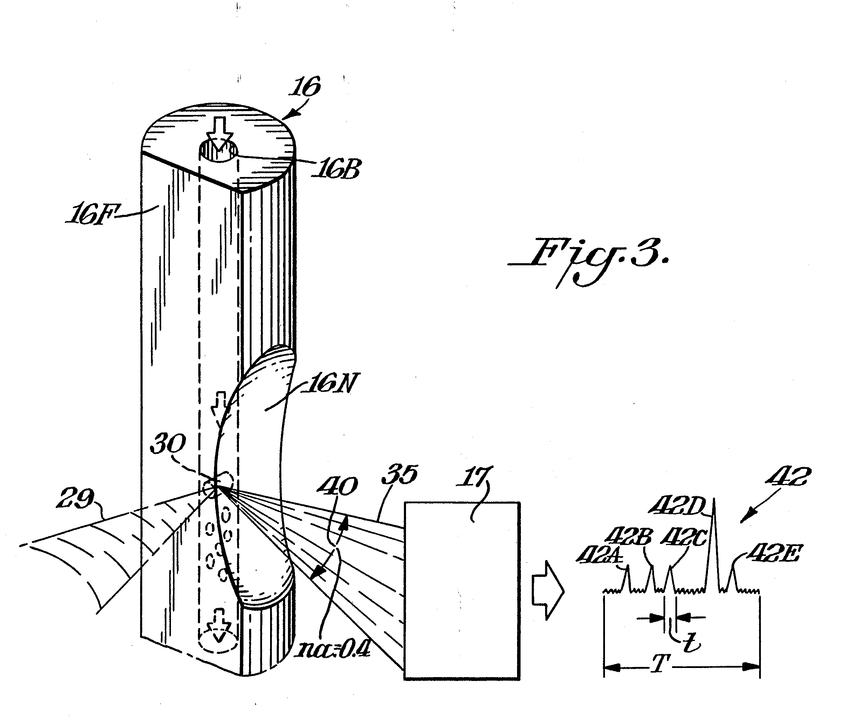

Shown in Figure 1 is a stylized pictorial representation of a particle counting system generally indicated by reference character 10 in accordance with the present invention. The particle counting system 10 includes a fractionating apparatus 12 and a particle counting apparatus generally indicated by reference character 14. The fractionating apparatus 12 is connected such that the eluate therefrom may be conducted in any suitable manner or caused to flow through the particle counting apparatus 14. The counting apparatus 14, such as that disclosed in the referenced copending

0118897

application of S. D. Abbott and C. W. Robertson, is responsive to the passage of particles in the eluate through a viewing zone 30 (Figure 3) located on the interior thereof and adapted to generate an electrical signal containing information representative of both the presence of a particle within the viewing zone and of the nature, i.e., size and composition as manifested by its index of refraction, of the particle. The counting apparatus 14 is adapted to count discrete particles having a sensitivity limit of detection S (as defined below) of at least 0.129. However, it should be understood that any suitable counting apparatus responsive in the manner just discussed may be used and remain within the contemplation of the present invention.

The Mie Theory relates to the radiation scattering properties of particles that are small as compared to the free space wavelength of the incident radiation. See, generally, Kerker, "The Scattering of Light and Other Electromagnetic Radiation", Academic Press, Inc. (1969). The term "size parameter" of a particle may be assigned the character " $\alpha$ " and is defined by Mie as follows:

$$\alpha = \frac{2\pi}{\lambda_o} m_2 a \qquad (1)$$

where

$m_2$ is the index of refraction of the medium in which the particle is entrained;

a is the radius of the particle, and

$\lambda_o$ is the free space wavelength of the incident radiation on the particle.

The term "relative refractive index" is assigned the character "m" and may be defined as:

$$m = \frac{m_1}{m_2} \qquad (2)$$

where $m_1$ is the refractive index of the particle.

The term "sensitivity limit of detection" of a particle is assigned the character "S" and may be defined as:

$$S = |(m-1)| \alpha \qquad (3)$$

In terms of Mie Theory, the apparatus disclosed and claimed in the above-referenced application of S. D. Abbott and C. W. Robertson is adapted to count particles each having an index of refraction close to that of the medium in which it is entrained and a radius on the order of 0.05 micrometers. For incident radiation on the order of 0.633 micrometers, $m_1$ on the order of 1.59, $m_2$ on the order of 1.33, such a particle has a sensitivity of detection S of at least 0.129.

Since the index of refraction of a particle is functionally related to the density of the particle, and since the particle's composition is related to its density, it may be appreciated that the apparatus disclosed in this referenced application is responsive to the nature of the particle.

The fractionating apparatus 12 may be any apparatus able to provide a highly resolved stream of articles entrained in a fluid, preferably liquid, medium (mobile phase), based upon a predetermined physical characteristic (e.g., effective mass) of the particle. The fractionating apparatus may be a disc centrifuge or a sedimentation field flow fractionation apparatus. Preferable for use as the fractionating apparatus is a sedimentation field flow fractionating apparatus. In such an apparatus, assuming a uniform particle density particles of smaller size elute from the apparatus 12 earlier than larger sized particles. Thus by counting the number of particles passing through the counting apparatus 14 during several predetermined time intervals an accurate indication of the particle population distribution (the number of particles within a given size range) may be obtained. The time interval may be any convenient interval consistent with the experimentally determinable factors of sedimentaton field flow fractionation (e.g., time constant of field gradient) and the sample concentration. In addition, since the counting apparatus 14 is also responsive to the particle's nature this information may be used to differentiate particles having a nature that differs from the nature of the particles of interest. A sedimentation field flow fractionating apparatus useful as the fractionating apparatus 12 is disclosed in United States Patent 4,284,497 (Grant) the disclosure of which is incorporated by reference herein.

The particle counting apparatus 14 includes a source 15 of collimated radiation at a predetermined wavelength (typically 0.633 micrometers), a cuvette, or sample cell 16 through which flows the eluate fluid stream having particles to be counted entrained therein, and a detector 17 responsive to the intensity of radiation scattered by each particle in the stream to generate an electrical signal containing information representative of both the presence and of the nature of the particle. A counter network 18 is operatively associated with the detector 17 to provide a count of the number of particles present in the stream that have a specific predetermined nature. The cuvette 16 in accordance with this invention is positioned at the intersection of a first (incident)

0118897

optical path generally indicated by reference character 22 and a second (collection) optical path generally indicated by reference character 24. The incident path 22 is preferably, but not necessarily, perpendicular to the collection path 24.

The first optical path 22 includes the radiation source 15. The source 15 produces the collimated radiation (indicated by reference character 25)which is directed toward a focusing objective lens 28. The objective lens 28 focuses the radiation, as shown by reference character 29, toward the cuvette 16. These elements, in cooperation with the geometry of the cuvette 16 to be discussed herein, serve to optically define and brightly illuminate a generally cylindrical viewing zone 30 (seen in Figure 3) defined in the interior of the cuvette 16. In accordance with the present invention the viewing zone 30 exhibits a volume of about one picoliter ($10^{-12}$ liters). This volume corresponds to the volume of a cube 0.1 mm on a side. By keeping the volume of the viewing zone 30 as small as practicable, the radiation collected by the detector 17 from Rayleigh scattering due to the carrier fluid medium (typically water, $m_2 = 1.33$) in the viewing zone 30 is reduced. Thus, a relatively high particle density fluid stream (on the order of $10^{11}$ particles/liter) having particles each with a size, i.e., radius, that ranges as low as 0.05 micrometers, having an index of refraction on the order of 1.59 ($m_1 = 1.59$) and thus a sensitivity limit of detection S (as defined above) of at least 0.129 may be detected, resolved and counted. Moreover, the small dimensions of the viewing zone 30 reduces the probability of simultaneously detecting two particles in the viewing zone. Preferably the source 15 is a laser, such as a two milliwatt helium-neon apparatus, which provides intense diffraction-limited illumination of

**0118897**

the viewing zone 30. Of course, any suitable source of intense diffraction-limited illumination may be utilized.

The second optical path 24 includes a positive objective lens 34 which collects radiation scattered in a cone as indicated by reference character 35. The objective lens 34 focuses and directs the collected radiation, as shown by reference character 36, toward a slit mask 37 disposed in front of the detector 17. These elements cooperate with the geometric configuration of the cuvette 16 to collect radiation scattered in a cone 35 with a relatively large (0.4) numeral aperture 40.

Referring to Figures 2A and 2B shown respectively are a plan and a side elevational view of a cuvette 16. The cuvette 16 is a substantially cylindrical member fabricated of Pyrex® glass although any material that is transparent to the radiation emitted by the source 15 and scattered by the particles may be used. The material used to fabricate the cuvette 16 exhibits an index of refraction that is selected to be close to the index of refraction of the carrier fluid medium in which the particles are entrained so as to minimize internal reflectance of scattered light at the interface between the cuvette and the medium. The cuvette may be fabricated in any suitable manner, including injection molding.

A bore 16B extends through the cuvette 16 to define a flow channel through which the carrier fluid medium carrying the particles to be counted may pass. The axis 16A of the bore 16B is parallel to the direction of fluid flow (i.e., perpendicular to the plane of Figure 1). Preferably the axis 16A is coincident with the axis of the cuvette 16. The length of the cuvette 16 should be at least about ten times the diameter of the bore 16B and is preferably, but not necessarily, about twenty-five times the diameter of the bore 16B.

The exterior of the cuvette 16 which is presented to the first optical path 22 is provided with a planar flattened portion 16F. This flattened portion 16F is provided with an optically smooth surface. The portion 16F extends for a distance along the height of the cuvette 16 sufficient to permit substantially aberration free illumination of the viewing zone 30 by radiation introduced thereinto from the source 15 along the first optical path 22. The exterior surface of the cuvette 16 is also provided with an indented cylindrical notch 16N. The cylindrical surface of the notch 16N has an axis 16S that is preferably oriented at a right angle to the axis 16A of the bore 16B. In the preferred case where the incident optical path 22 is perpendicular to the collection optical path 24 the axis 16S of the surface of the notch 16N also extends perpendicularly to the surface of the flattened portion 16F. Of course, this relationship is suitably modified to conform to the angle between the incident and the collection paths. The radius 16R of the cylinder on which lies the surface of the cylindrical notch 16N is typically larger than the radius of the bore 16B. The dimension of the radius of the indented cylindrical surface 16N is selected by geometric ray tracing techniques based upon the refractive indices of the carrier fluid medium and the material of the cuvette 16 to permit near aberration free collection of the radiation scattered from the particles passing through the viewing zone 30.

The cylindrical notch 16N compensates for the astigmatism introduced into the portion 35 of the collection optical path 24 by the differences in indices of refraction of the cuvette 16 and the carrier fluid medium and by the curvature of the bore 16B. Correction for this astigmatism is best done relatively near to the bore and is necessary only in the collection optical path 24 due to the

0118897

relatively large numerical aperture (i. e., numerical aperture 0.4) of the portion 35 of the collection path 24 as compared to the numerical aperture of the portion 29 of the incident optical path 22 (numerical aperture 0.02). The cylindrical notch 16N is sized so that the positive objective lens 34 may be inserted into the notch 16N and positioned close to the bore 16B. The concave surfaces of the cylindrical bore 16B and of the notch 16N form an orthogonal pair of negative cylindrical optical surfaces adapted to provide a numerical aperture of at least 0.4 to the objective 34. This large numerical aperture enables one to observe radiation scattered from a small particle over a wide range of angles to thereby enhance the detectability of such a particle.

The operation of the system 10 utilizing the particle counting apparatus 14 having the cuvette 16 therein is schematically shown in Figure 3. The particles entrained in the carrier fluid medium elute from the fractionating apparatus 12 into the counting apparatus 14. The stream is passed through the cylindrical bore 16B and through the viewing zone 30 optically defined therein. The radiation from the source 15 is focused into the viewing zone 30 by the action of the objective 28 and the surface 16F on the cuvette 16. Radiation is scattered by particles passing through the viewing zone 30 into the light collection cone 35 and collected by the combined effects of the collection optics including the medium, the bore 16B, the notch 16N and the objective 34 (not shown in the schematic illustration of Figure 3). The cone 35 of collected scattered light is collected and imaged on a slit in the mask 36 (also not shown in Figure 3) perpendicular to its image. Thus, the intensity of the radiation scattered by particles in the viewing zone 30 and collected by the collection optics is in proportion to the magnification of the collection optics and to the width of the slit in the mask 36. Radiation passing through the slit in the mask 36 is detected by the detector 17, typically a photodetection assembly such as that manufactured and sold by RCA under model number PF1006.

The output of the detector 16 is a series of pulses 42. Each pulse in the series is produced by the passage of a particle through the viewing zone 30 and contains information which is indicative of both the presence of a particle within the viewing zone and of the nature thereof. For example, each of the detected pulses 42A through 42E (Figure 3) is representatve of the fact that during a selected time interval T (selected in any convenient manner) a particle corresponding to each pulse passed through the viewing zone. (The residence time of each particle in the zone 30 is indicated by the time t.) Moreover, since the intensity of the light scattered by each particle is determined by its nature, e.g., the pulse 42D additionally contains information indicating that the nature of the particle generating such a pulse differs from that of the particles producing the other pulses. Thus, for example, if the particles entrained in the carrier fluid medium were believed to exhibit a similar nature, during any time interval T following the beginning of the separation particles of similar effective mass should be sampled from the fractionating apparatus. By counting the number of particles in any number of intervals T, a quantitative particle size population distribution may be obtained. In addition, since the information content of the pulses 42 also contains information relating to the nature of each particle, the quantitative distribution generated is selective in that particles (such as that generating the pulse 42D) having other than a predetermined nature, as accounted for.

The counter network 18 may conveniently take the form disclosed in Figure 1. The output 42 of the detector 17 is applied to the inverting terminal of a comparator 44 configured from an operational amplifier such as that sold by Burr Brown Inc. under model number OPA605KG. The noninverting terminal of the comparator 44 is provided with a reference voltage derived from a potentiometer 46. When the pulse output of the detector 42 exceeds the reference a digital counter 48 is incremented. At the end of a predetermined time interval T, as derived from any suitable timing generaor 52, the count in the counter 48 provides an indication of the number of particles in the volume of the stream separated from the fractionating apparatus 12 during that time interval T that lies within a predetermined size range. The counter 48 is reset, the reference voltage is increased and the counting repeated during a subsequent time interval T until all desired values of the reference voltage are used. In this manner a population distribution of the particles in the sample (in terms of pulse height) may be obtained.

In practice, several modifications of the foregoing may be implemented. For example, the comparator 44 may be connected to a frequency-to-voltage converter, such as that sold by Dynamic Measurements Corp. under model number 9110, adapted to generate a d.c. voltage signal which is functionally related to the number of particles counted during any interval T. The converter may be interfaced with a suitable apparatus (as a Digital Equipment Corp. MINC minicomputer operating in accordance with a program) to store the count obtained during each interval. Both the threshold value and the output of the converter may be varied and read under the control of the computer. One could thus sweep through values of threshold and record resulting voltages to obtain a "greater than" plot of pulse height for the sample. A MINC Basic Language Version 2 program suitable for such a purpose is included as an Appendix attached to and made part of this application. Further, the interval timing may itself be controlled by the microcomputer. Of course, other suitable modifications may be utilized by those skilled in the art.

In view of the foregoing, it is now appreciated that when the particle counting apparatus 14 (such as that disclosed hereinabove) is used together with a fractionating apparatus 12 such as a sedimentation field flow fractionation apparatus or a disc centrifuge, the particle counting system so produced can provide a more powerful information set than when either apparatus is used separately. The eluate is a collection of particles which is characterized by the fact that particles of a given effective mass elute at a given time while particles of another effective mass elute at a different time. The effective mass of a particle is a function of both the particle's diameter and its density. The particle counting apparatus 14 is responsive to a particle's diameter and to the refractive index differences between the particle and the medium in which it is entrained and between the medium and the material used to fabricate the cuvette. The counting apparatus can thus be used to simply measure particle number concentration over the whole preparation in order to make possible an accurate a priori particle size distribution measurement. The information produced can be used to delete spurious artifacts (e.g., seal shards) to verify that a sample is, indeed, homogeneous (i.e., the refractive index is the same over all particle diameters) or to detect and to rationalize fractionation ambiguities due to mixed mechanisms.

Those skilled in the art, having the benefit of the teachings of the present invention as hereinabove set forth may effect numerous modifications thereto. These modifications are to be construed as lying within the scope of the present invention, as set forth in the appended claims.

WHAT IS CLAIMED IS:

0118897

1.  A system for providing a selective particle size population distribution of particles having a particular predetermined nature contained in a sample comprising:

a fractionating apparatus for separating the particles in the sample in accordance with a predetermined physical property; and

a counting apparatus connected to a fractionating apparatus and arranged such that the eluate therefrom passes therethrough, the counting apparatus being responsive to the passage of each particle to generate a signal containing information indicative of the presence of the particle and representative of the nature of the particle, the counting apparatus including a counter network responsive to the signal produced by each particle to generate a quantitative population distribution which accounts for particles having a nature different from that of the particles of interest and which detects and rationalizes ambiguities due to mixed fractionation mechanisms.

2.  A system for providing a selective particle size population distribution of particles having a particular predetermined nature contained in a sample comprising:

0118897

a fractionating apparatus for separating the particles in the sample in accordance with their effective mass such that during any predetermined time interval T following the beginning of a separation particles eluted from the fractionating apparatus each have substantially the same effective mass; and

a counting apparatus connected to the fractionating apparatus and arranged such that the eluate therefrom passes therethrough, the counting apparatus being responsive to the passage of each particle to generate a signal containing information indicative of the presence of the particle and representtive of the nature of the particle, the counting apparatus including a counter network responsive to each signal produced by each particle to thereby generate, after a predetermined number of intervals T, a quantitative particle size population distribution which accounts for particles having a nature different from that of the particles of interest and which detects and rationalizes ambiguities due to mixed fractionation mechanisms.

3. A method for providing a selective particle size population distribution of particles having a particular predetermined nature contained in a sample comprising the steps of:

(a)  separating the particles into a stream wherein during any predetermined time interval T following the beginning of the separation the particles in the volume of the stream eluted in that interval T have a substantially equal effective mass;

(b)  counting the particles in the volume eluted during the interval T taking into account any particles eluted which have a nature different from the nature of interest; and

(c)  repeating the step (b) in at least one subsequent interval T to thereby generate a quantitative particle size population distribution of the particles which accounts for particles having a nature different from that of the particles of interest and which detects and rationalizes ambiguities due to mixed fractionation mechanisms.

Fig.1.

Fig.2A.

Fig.2B.

Fractionating
Device

_Fig.3._